# EUROPÄISCHE PATENTANMELDUNG

(11) **EP 4 703 582 A1**
(43) Veröffentlichungstag der Anmeldung: **04.03.2026**
(21) Anmeldenummer: 24196526.8
(22) Anmeldetag: 26.08.2024
(51) Int. Cl.: F03D 1/06

(54) **ROTORBLATT, VERFAHREN UND WINDENERGIEANLAGE**

(71) Anmelder: Wobben Properties GmbH, 26607 Aurich (DE)
(72) Erfinder: Stemberg, Jochen, 26607 Aurich (DE); Arnold, Matthias, 26603 Aurich (DE)
(74) Vertreter: Eisenführ Speiser

(57) **Zusammenfassung**

Die Erfindung betrifft ein Rotorblatt (108) für eine Windenergieanlage (100), wobei sich das Rotorblatt (108) von einer Rotorblattwurzel bis zu einer Rotorblatt-spitze in einer Rotorblattlängsrichtung mit einer Rotorblattlänge erstreckt und dabei eine sich zwischen einer Vorderkante und einer Hinterkante in Profiltiefenrichtung einstellende Profiltiefe aufweist, wobei eine Radiusposition den radialen Abstand in Rotorblattlängsrichtung zu einer Rotorachse angibt, die Hinterkante des Rotorblattes mindestens zwei Hinterkantenelementsätze (10) aufweist, die eine Kontur der Hinterkante in Profiltiefenrichtung verändern, jeder der Hinterkantenelementsätze (10) mindestens zwei Hinterkantenelemente (20) umfasst, die voneinander unterschiedlich ausgebildet sind, dadurch gekennzeichnet, dass mindestens ein Hinterkantenelement (20) eines ersten der Hinterkantenelementsätze (10), das in Rotorblattlängsrichtung näher an der Rotorblattspitze angeordnet ist, größer ist als ein Hinterkantenelement (20) eines zweiten der Hinterkantenelementsätze (10), das in Rotorblattlängsrichtung näher an der Rotorblattwurzel angeordnet ist.

## Beschreibung

Die Erfindung betrifft ein Rotorblatt für eine Windenergieanlage, ein Verfahren zur Herstellung und/oder Wartung eines Rotorblattes für eine Windenergieanlage und eine Windenergieanlage.

Windenergieanlagen sind bekannt. Sie stellen nicht nur eine der zuverlässigsten und effizientesten Quellen erneuerbarer Energien dar, sondern können theoretisch auch überall eingesetzt werden und somit zu einer Dezentralisierung der Stromerzeugung beitragen, die wiederum einen Neubau aufwendiger und teurer Stromtrassen vermeidet und bestehende Stromtrassen entlastet. Um dies zu erreichen müsste jedoch eine Vielzahl neuer Standorte für Windenergieanlagen erschlossen werden, gerade in dicht besiedelten Gebieten, in denen der Strombedarf entsprechend hoch ist.

Dem steht aktuell unter anderem die potentielle Lärmbelästigung von Anwohnern nahe Windenergieanlagen entgegen, da Windenergieanlagen durch die Verwirbelungen an den Rotorblättern nicht zu vernachlässigende Lärmemission verursachen. Daher werden Möglichkeiten gesucht, Rotorblätter im Betrieb leiser zu gestalten.

Zusätzlich stellen die strukturellen Anforderungen an Windenergieanlagen und insbesondere Rotorblätter eine zunehmende Herausforderung dar. Besonders im Stillstand der Windenergieanlage, beispielsweise bei Extremwindbedingungen, tritt Induktion ungewollter Schwingungen auf, die negative Auswirkungen auf die Stabilität einzelner Komponenten der Windenergieanlage haben.

Vor diesem Hintergrund lag der Erfindung die Aufgabe zugrunde ein Rotorblatt bereitzustellen, dass im Betrieb die erzeugte Lärmemission gegenüber herkömmlichen Rotorblättern reduziert und gleichzeitig die Stabilitätseigenschaften der Windenergieanlage im Stillstand verbessert.

Gemäß einem ersten Aspekt der Erfindung wird die obige Aufgabe durch ein Rotorblatt für eine Windenergieanlage gelöst, wobei sich das Rotorblatt von einer Rotorblattwurzel bis zu einer Rotorblattspitze in einer Rotorblattlängsrichtung mit einer Rotorblattlänge erstreckt und dabei eine sich zwischen einer Vorderkante und einer Hinterkante in Profiltiefenrichtung einstellende Profiltiefe aufweist, wobei eine Radiusposition den radialen Abstand in Rotorblattlängsrichtung zu einer Rotorachse angibt, die Hinterkante des Rotorblattes mindestens zwei Hinterkantenelementsätze aufweist, die eine Kontur der Hinterkante in Profiltiefenrichtung verändern, jeder der Hinterkantenelementsätze mindestens zwei Hinterkantenelemente umfasst, die voneinander unterschiedlich ausgebildet sind, dadurch gekennzeichnet, dass mindestens ein Hinterkantenelement eines ersten der Hinterkantenelementsätze, das in Rotorblattlängsrichtung näher an der Rotorblattspitze angeordnet ist, größer ist als ein Hinterkantenelement eines zweiten der Hinterkantenelementsätze, das in Rotorblattlängsrichtung näher an der Rotorblattwurzel angeordnet ist.

Die Windenergieanlage weist dabei einen Rotor und mindestens ein an dem Rotor anbringbares Rotorblatt auf. Die Radiusposition ist eine Angabe eines Abstandes von der Rotorachse dieses Rotors. Neben zumindest einem Teil der Rotorblattlänge beinhaltet die Radiusposition auch einen Abstand der Rotorblattwurzel zur Rotorachse über die Rotornabe.

Die Kontur der Hinterkante eines herkömmlichen Rotorblatts verläuft für gewöhnlich gerade, senkrecht zur Profiltiefenrichtung von der Rotorblattwurzel bis hin zur Rotorblattspitze. Durch das Anbringen von mindestens zwei Hinterkantenelementsätzen wird diese gerade Kontur verändert, beispielsweise zu einem Zick-Zack- oder wellenartigen Verlauf. Eine so geänderte Kontur verläuft in den Bereichen, in denen die mindestens zwei Hinterkantenelementsätze angebracht wurden nicht mehr senkrecht zur Profiltiefenrichtung.

Ein Hinterkantenelementsatz umfasst dabei mindestens zwei Hinterkantenelemente, die voneinander unterschiedlich ausgestaltet sind. Diese unterschiedliche Ausgestaltung zeigt sich zumindest in einer unterschiedlichen Größe, allerdings können auch weitere Eigenschaften der mindestens zwei Hinterkantenelemente unterschiedlich ausgestaltet sein, beispielsweise ein Anstellwinkel zur Profiltiefenrichtung, eine Drehung bezüglich der Hinterkante oder eine Krümmung einer oder mehrerer Kanten der Hinterkantenelemente in Bezug auf die Hinterkante.

Bei einem Hinterkantenelement handelt es sich beispielsweise um eine Serration, Borste, Lamelle, Platte oder Klappe.

Das Rotorblatt weist mindestens zwei Hinterkantenelementsätze auf, die bevorzugt an der Hinterkante des Rotorblatts anbringbar ausgestaltet sind. Die Hinterkantenelementsätze sind dabei in einer Ausführungsform in einer gleichen Orientierung bezüglich der Rotorblattwurzel und/oder der Rotorblattspitze an dem Rotorblatt angebracht. Beispielsweise können die Hinterkantenelementsätze derart angebracht sein, dass ein Hinterkantenelement, das innerhalb des jeweiligen Hinterkantenelementsatzes am nächsten an der Rotorblattwurzel oder Rotorblattspitze angeordnet ist, sich unter den Hinterkantenelementsätzen gleicht. Weist beispielsweise jeder Hinterkantenelementsatz ein größeres Hinterkantenelement und ein respektive kleineres Hinterkantenelement auf, sind die Hinterkantenelementsätze in einer Ausführungsform derart angeordnet, dass innerhalb jedes Hinterkantenelementsatzes das größere Hinterkantenelement näher an der Rotorblattwurzel angeordnet ist als das respektive kleinere Hinterkantenelement. In einer weiteren Ausführungsform sind die Hinterkantenelementsätze derart angeordnet, dass jeder zweite Hinterkantenelementsatz entgegen einem vorigen in Rotorblattlängsrichtung an der Hinterkante angebrachten Hinterkantenelementsatz ausgerichtet ist.

Zumindest einer der Effekte der Erfindung wird bereits dann erzielt, wenn mindestens ein Hinterkantenelement eines ersten der Hinterkantenelementsätze, das in Rotorblattlängsrichtung näher an der Rotorblattspitze angeordnet ist, größer ist als ein Hinterkantenelement eines zweiten der Hinterkantenelementsätze, das in Rotorblattlängsrichtung näher an der Rotorblattwurzel angeordnet ist. Dieser Größenunterschied der Hinterkantenelemente resultiert in einer Stufe im Verlauf der Größe der Hinterkantenelemente in Rotorblattlängsrichtung.

In bisherigen Lösungen wurden die Längen bzw. die Größe der Serrations an den lokalen Einbauort im Rotorblatt angepasst. Dies führte dazu, dass die Länge bzw. Größe der Serrations entweder gleichbleibend, oder mit zunehmender radialer Einbauposition kontinuierlich oder stufenförmig monoton abnehmend war.

Es ist eine Erkenntnis der Erfindung in den Verlauf von Hinterkantenelementen, insbesondere Serrations, entlang des Radius eines Rotorblattes bewusst Stufen einzubauen, an denen mit zunehmenden Radius die Größe der Hinterkantenelemente bevorzugt ansteigt, insbesondere sprunghaft ansteigt. Dadurch ergibt sich auch eine signifikante Stufe in der effektiven Blatttiefe, die sich aus Profiltiefe plus effektiver Länge der Hinterkantenelemente in Profiltiefenrichtung ergibt.

Nach einer solchen Stufe nimmt in einer bevorzugten Ausführungsform die Länge bzw. Größe der Hinterkantenelemente mit zunehmendem Radius insbesondere deutlich stärker ab, als es bei bisher bekannten Lösungen der Fall ist. Dadurch ergibt sich beispielsweise eine sägezahn- bzw. tannenbaumähnliche Verteilung einer Serrationlänge bzw.-größe entlang der Rotorblatthinterkante. Andere Variationen der effektiven Blatttiefe (z.B. Sinusförmig, Dreieckig, Kombinationen aus Sinus und Sägezahn usw.) sind ebenfalls denkbar.

Ziel dieser Geometrieverteilung ist es, Variationen in der effektiven Blatttiefe zu erreichen, was bei abgelöster Strömung, insbesondere bei Trudelbetrieb oder mit blockierter Rotorachse, die Ausbildung von Wirbeln gleicher Frequenz über eine größere Blattspannweite unterbindet. Die Frequenz der Wirbel korreliert hierbei mit der effektiven Blatttiefe, wobei sich benachbarte Wirbel synchronisieren können. Diese Synchronisation wird durch die Geometrieverteilung zusätzlich unterbunden. Dabei werden die aerodynamischen Eigenschaften des Rotorblattes nicht, oder nur wenig negativ beeinflusst. Gemäß einer Erkenntnis der Erfindung wird der vorteilhafte Effekt verstärkt, je größer die Variationen in der effektiven Blatttiefe sind. Angesichts der aerodynamischen Eigenschaften des Rotorblattes sowie Lastbegrenzungen ist die Größe einzelner Hinterkantenelemente und somit der Variationen in der effektiven Blatttiefe allerdings beschränkt. Aus diesem Optimierungsproblem ergibt sich eine bevorzugte Variation der effektiven Blatttiefe von mindestens 0.5 % der lokalen Profiltiefe bis maximal 20 % der lokalen Profiltiefe pro Radiuszunahme entsprechend der lokalen Profiltiefe . Die lokale Profiltiefe bezieht sich dabei auf die Profiltiefe des Rotorblattes an der Radiusposition, an der die zwei Hinterkantenelementsätze, die die Variation in der effektiven Blatttiefe bilden, an der Hinterkante angebracht sind. Die Bezeichnung effektive Blatttiefe ist hierbei als Synonym einer effektiven Profiltiefe zu verstehen und umfasst die Profiltiefe, sowie eine Ausdehnung der Hinterkantenelemente parallel zur Profiltiefe ab der Hinterkante, also eine Fläche der Hinterkantenelemente, die im Betrieb des Rotorblattes aerodynamisch aktiv ist.

Die Grundform der einzelnen Hinterkantenelemente führt hierbei zu einer Reduzierung der Lärmemission des Rotorblattes im Betrieb. Hierfür ist die Verteilung der effektiven Profiltiefe von untergeordneter Bedeutung. Dieser Freiheitsgrad im Entwurf wird durch die Erfindung genutzt, um den Zweck der Vermeidung von Wirbeln gleicher Frequenz zu erreichen.

Eine Erkenntnis der Erfindung ist, dass Schwingungen aufgrund sogenannter wirbelinduzierter Anregung (engl. Vortex induced Vibrations, ViV) zu kritischen Rotorblattschwingungen im Stillstand führen können. Diese Anregung entsteht durch periodisch ablösende Wirbel, wenn das Rotorblatt im Stillstand quer angeströmt wird, so dass sich hinter dem Rotorblatt ein Ablösegebiet ausbildet.

Durch die oben beschriebene Geometrieverteilung lassen sich also ebenfalls Anregung und Schwingweite von wirbelinduzierten Querschwingungen an Rotorblättern unter stark abgelösten Strömungsbedingungen, insbesondere bei +/-90° Anströmung auf Rotorblattprofile reduzieren. Die Reduzierung dieser wirbelinduzierten Querschwingungen verbessert die Stabilitätseigenschaften des Rotorblatts und der Windenergieanlage im Stillstand.

In bisherigen Vorgehensweisen wurden Hinterkantenelemente, insbesondere Serrations, ausschließlich so ausgelegt, dass sie eine größtmögliche schallreduzierende Wirkung entfalten. Die Erfindung stellt nun eine Anordnungsregel für Hinterkantenelementsätze und somit insbesondere Hinterkantenelemente bereit, die neben einer verbesserten schallreduzierenden Wirkung auch die Stabilitätseigenschaften des Rotorblatts und der Windenergieanlage im Stillstand verbessert.

Gemäß einer ersten vorteilhaften Ausführungsform des ersten Aspekts der Erfindung umfasst jeder der Hinterkantenelementsätze eine gleiche Anzahl an Hinterkantenelemente.

Jedes der Hinterkantenelementsätze umfasst beispielsweise zwei, drei oder mehr Hinterkantenelemente, bevorzugt zwischen 5 und 40 Hinterkantenelemente.

Die gleiche Anzahl an Hinterkantenelementen der Hinterkantenelementsätze ermöglicht eine homogene Verteilung der Reduzierung der wirbelinduzierten Querschwingungen zumindest über den Bereich des Rotorblattes, in dem die Hinterkantenelementsätze an der Hinterkante des Rotorblattes angeordnet sind.

Eine gleiche Anordnung der einzelnen Hinterkantenelemente innerhalb der Hinterkantenelementsätze begünstigt die homogene Verteilung der Reduzierung der wirbelinduzierten Querschwingungen zusätzlich.

Gemäß einer weiteren vorteilhaften Ausführungsform des ersten Aspekts der Erfindung variiert die Größe der Hinterkantenelemente von Hinterkantenelementsatz zu Hinterkantenelementsatz, insbesondere abhängig von der Position in Rotorblattlängsrichtung.

Vorzugsweise nimmt die Größe der Hinterkantenelemente von Hinterkantenelementsatz zu Hinterkantenelementsatz in Rotorblattlängsrichtung in Richtung Rotorblattspitze ab. Diese Abnahme orientiert sich insbesondere an einer Abnahme der Profiltiefe des Rotorblatts in Richtung Rotorblattspitze und führt dazu, dass die Variationen in der effektiven Blatttiefe nicht zu groß werden und potentiell daraus resultierende negative Effekte vermieden werden.

Insbesondere variiert die Größe der Hinterkantenelemente von Hinterkantenelementsatz zu Hinterkantenelementsatz entsprechend einer lokalen Profiltiefe an der Stelle jeder der Hinterkantenelementsätze, sodass eine relative Variation der effektiven Blatttiefe innerhalb eines Bereichs eines Hinterkantenelementsatzes unter den Hinterkantenelementsätze im Wesentlichen gleich ist. Dies begünstigt eine homogene Verteilung der Wirbelreduzierung über das Rotorblatt und verbessert die aeroakustischen Eigenschaften und Stabilitätseigenschaften des Rotorblatts.

Gemäß einer weiteren vorteilhaften Ausführungsform des ersten Aspekts der Erfindung ist die Größe der Hinterkantenelemente eines Hinterkantenelementsatzes mit zunehmender Radiusposition abnehmend ausgebildet und insbesondere eine Ausdehnung der Hinterkantenelemente eines Hinterkantenelementsatzes in Profiltiefenrichtung von der Hinterkante mit zunehmender Radiusposition abnehmend ausgebildet, bevorzugt derart, dass die Ausdehnung pro Radiuszunahme entsprechend einer lokalen Profiltiefe an der Radiusposition des Hinterkantenelementsatzes um mindestens 0,5 % der lokalen Profiltiefe und maximal 20 % der lokalen Profiltiefe abnimmt.

Diese Ausführungsform bezieht sich auf die Größenverhältnisse der Hinterkantenelemente eines Hinterkantenelementsatzes.

In dieser Ausführungsform weisen die Hinterkantenelemente eines Hinterkantenelementsatzes eine in Rotorblattlängsrichtung monoton abnehmende Größe auf. Bevorzugt bezieht sich diese Größe auf eine aerodynamisch wirksame Fläche der Hinterkantenelemente, beispielsweise eine Ausdehnung der Hinterkantenelemente von der Hinterkante aus im Wesentlichen in Profiltiefenrichtung. Diese Ausdehnung nimmt entsprechend mit zunehmender Radiusposition der Hinterkantenelemente ab. Bevorzugt ist diese Abnahme abhängig von der lokalen Profiltiefe ausgestaltet und beträgt besonders bevorzugt mindestens 0,5 % einer lokalen Profiltiefe an der Radiusposition des Hinterkantenelementsatzes und maximal 20 % der lokalen Profiltiefe pro Radiuszunahme entsprechend der lokalen Profiltiefe . Bevorzugt wird für die lokale Profiltiefe an der Radiusposition des Hinterkantenelementsatzes eine mittlere lokale Profiltiefe für den Blattbereich angenommen, über den sich der Hinterkantenelementsatz an der Hinterkante erstreckt. Die lokale Profiltiefe ist dabei die Profiltiefe von Nasenkante des Profils bis zum Anfang bzw. nächsten Punkt der Hinterkantenelemente. Die Tiefe der Hinterkantenelemente ist die Länge vom Anfang des Hinterkantenelements bis zur äußersten Spitze des Hinterkantenelements. Die effektive Profiltiefe ist der Mittelwert über die Breite des Hinterkantenelementsatzes entlang der Hinterkante über die lokale Profiltiefe und die Tiefe der Hinterkantenelemente. Die Hinterkantenelemente eines Hinterkantenelementsatzes, der angebracht an der Hinterkante eines Rotorblatts in radialer Richtung eine Länge von einer lokalen Profiltiefe aufweist, weisen bevorzugt also eine monotone Abnahme der Größen der einzelnen Hinterkantenelemente mit zunehmender Radiusposition um mindestens 0,5 % der lokalen Profiltiefe und maximal 20 % der lokalen Profiltiefe auf.

Gemäß einer weiteren vorteilhaften Ausführungsform des ersten Aspekts der Erfindung handelt es sich bei den Hinterkantenelementen um Serrations.

Serrations sind eine bekannte Art von Schallschutzmitteln, die an der Hinterkante angeordnet sind und eine effektive Kontur der Hinterkante, also einer Abströmkante, modifizieren. Damit werden die akustischen Auswirkungen der Luftverwirbelungen an der Hinterkante des Rotorblattes verringert und die Windenergieanlage kann geräuschärmer betrieben werden.

In einer Ausführungsform weisen Serrations verschiedener Größe ein gleiches Verhältnis von Länge zu Breite der Zacken auf. In anderen Optionen kann sich auch nur die Länge der Zacken unterscheiden, wobei die Breite der Zacken gleichbleibt. Auch Kombinationen sind vorstellbar, wobei beispielsweise eine doppelte Länge mit einer um 50% größeren Breite einhergeht.

Gemäß einer ersten bevorzugten Variante der obigen Ausführungsform des ersten Aspekts der Erfindung gibt eine effektive Blatttiefe die gemittelte Profiltiefe über die Ausdehnung einer Serration in radialer Richtung an, und bleibt die effektive Blatttiefe für einen Bereich zwischen zwei Radiuspositionen, die den Beginn und das Ende eines Hinterkantenelementsatzes in radialer Richtung angeben, konstant.

In dieser Ausführungsform beschreibt die effektive Blatttiefe die Profiltiefe des Rotorblattes inklusive der Ausdehnung einer Serration von der Hinterkante in im Wesentlichen Profiltiefenrichtung gemittelt über einen Bereich zwischen zwei Radiuspositionen, die den Beginn und das Ende der Serration in radialer Richtung angeben. Die effektive Blatttiefe bleibt für einen Bereich zwischen zwei Radiuspositionen, die den Beginn und das Ende eines Hinterkantenelementsatzes in radialer Richtung angeben, konstant. Demnach ist die effektive Blatttiefe für jede der Serrations des Hinterkantenelementsatzes konstant.

Davon ausgehend, dass die Profiltiefe des Rotorblattes in radialer Richtung abnehmend ausgestaltet ist, bedeutet dies, dass in dieser Ausführungsform die Größe der Serrations innerhalb eines Hinterkantenelementsatzes in radialer Richtung zunimmt. Die Variation in der effektiven Blatttiefe über das Rotorblatt entsteht durch unterschiedliche effektive Blatttiefen zwischen den Hinterkantenelementsätzen. Je mehr Hinterkantenelementsätze nach dieser Ausführungsform an der Hinterkante des Rotorblatts angebracht sind, desto größer ist die Variation in der effektiven Blatttiefe, die einen vorteilhaften Effekt hervorruft.

Die obige Variante kann ferner vorteilhafterweise so ausgeführt werden, dass die effektive Blatttiefe für benachbarte Hinterkantenelementsätze in Richtung Rotorblattspitze abnimmt.

In dieser Ausführung bleibt die effektive Blatttiefe für einen Bereich zwischen zwei Radiuspositionen, die den Beginn und das Ende eines Hinterkantenelementsatzes in radialer Richtung angeben, konstant, nimmt jedoch in radialer Richtung in Richtung Rotorblattspitze von Hinterkantenelementsatz zu Hinterkantenelementsatz ab.

Davon ausgehend, dass die Profiltiefe des Rotorblattes in radialer Richtung abnehmend ausgestaltet ist, bedeutet dies jedoch nicht zwingend, dass die Größenverhältnisse der Serrations zwischen zwei Hinterkantenelementsätzen von Hinterkantenelementsatz zu Hinterkantenelementsatz in radialer Richtung in Richtung Rotorblattspitze abnehmen. Es ist ebenfalls möglich, dass die Größe der Serrations von einem Hinterkantenelementsatz zu einem benachbarten Hinterkantenelementsatz in radialer Richtung in Richtung Rotorblattspitze zunimmt und gleichzeitig die effektive Blatttiefe abnimmt. Hierzu darf die Vergrößerung der Serrations lediglich nicht größer sein, als die Abnahme der Profiltiefe des Rotorblatts in Richtung Rotorblattspitze.

Gemäß einer weiteren bevorzugten Variante der obigen Ausführungsform des ersten Aspekts der Erfindung ist die Länge der Serrations eines Hinterkantenelementsatzes in radialer Richtung entsprechend einer Sinus-Funktion ausgebildet.

Als Länge der Serrations wird hierbei eine Ausdehnung der Serrations von der Hinterkante im Wesentlichen in Profiltiefenrichtung angenommen. Im Wesentlichen in Profiltiefenrichtung schließt eine Abweichung von der Profiltiefenrichtung von ±20° ein. Bei der Länge der Serration wird immer von einer maximalen Ausdehnung der Serration in diesem Bereich ausgegangen.

Die Ausgestaltung der Serrationslänge als Sinus-Funktion resultiert in einer Sinus-Funktion-förmigen Variation der effektiven Blatttiefe und somit in einer homogenen Reduzierung von Wirbeln über die Länge des Hinterkantenelementsatzes.

Eine Amplitude dieser Sinus-Funktion kann dabei konstant ausgestaltet sein oder über die Länge des Hinterkantenelementsatzes variieren. Vorzugsweise weist die Amplitude über die gesamte Länge des Hinterkantenelementsatzes einen Wert über 0 % der lokalen Profiltiefe und maximal 30 % der lokalen Profiltiefe auf.

Eine Periode dieser Sinus-Funktion kann konstant ausgestaltet sein oder über die Länge des Hinterkantenelementsatzes variieren. Vorzugsweise weist die Periode über die gesamte Länge des Hinterkantenelementsatzes einen Wert auf, der mindestens der lokalen Profiltiefe und maximal 50 % des Radius von Rotorblattspitze zu Rotordrehachse entspricht.

Gemäß einer weiteren bevorzugten Variante der obigen Ausführungsform des ersten Aspekts der Erfindung umfasst jeder Hinterkantenelementsatz zwei Arten jeweils gleicher Serrations, die alternierend in Rotorblattlängsrichtung angeordnet sind.

Als Art einer Serration wird hierbei eine Eigenschaft der Serration, beispielsweise die Größe, betrachtet. Beispielsweise handelt es sich in dieser Ausführungsform bei zwei Serrations, die sich ausschließlich durch die Größe unterscheiden um zwei Arten von Serrations.

Die abwechselnde Anordnung zweier verschiedener Arten von Serrations erleichtert die Auslegung der Serrations auf mehrere Betriebszustände. So kann zum Beispiel eine Reihe von größeren Serrations auf eine optimale Reduktion des Hinterkantenlärms bei großen Anstellwinkeln optimiert sein, während eine Reihe von respektive kleineren Serrations für die Schallreduktion bei kleineren Anstellwinkeln optimal ist. Alternativ kann mit größeren Serrations ein raueres, beispielsweise mit Insekten beschlagenes, Blatt optimiert werden, während mit den respektive kleineren Serrations ein sauberes Blatt akustisch optimiert wird. Zusätzlich sorgt die überlagerte Größenvariation der kleineren und größeren Serrations dafür, dass sich keine kohärenten Wirbelstraßen bilden können.

Die Erfindung ist jedoch nicht auf zwei Arten jeweils gleicher Serrations innerhalb eines Hinterkantenelementsatzes beschränkt, sondern umfasst auch drei oder mehr Arten jeweils gleicher Serrations innerhals eines Hinterkantenelementsatzes.

Gemäß einer weiteren bevorzugten Variante der obigen Ausführungsform des ersten Aspekts der Erfindung oder einer weiteren vorteilhaften Ausführung der obigen Varianten stimmt die Länge der einzelnen Serrations der Hinterkantenelementsätze von der Serration, die im jeweiligen Hinterkantenelemensatz die geringste Radiusposition aufweist, bis zur Serration, die im selben Hinterkantenelementsatz die größte Radiusposition aufweist, unter den Hinterkantenelementsätzen überein oder nimmt mit zunehmender Radiusposition der Hinterkantenelementsätze ab.

Diese Ausführungsform beschreibt ein Größenverhältnis der Serrations von Hinterkantenelementsätzen verglichen zwischen mehreren Hinterkantenelementsätzen. Jeder der Hinterkantenelementsätze weist angebracht an der Hinterkante des Rotorblattes eine Serration auf, die innerhalb des jeweiligen Hinterkantenelementsatzes eine geringste Radiusposition verglichen mit den weiteren Hinterkantenelementen des jeweiligen Hinterkantenelementsatzes aufweist. Ebenso weist jeder der Hinterkantenelementsätze eine Serration auf, die innerhalb des jeweiligen Hinterkantenelementsatzes eine größte Radiusposition verglichen mit den weiteren Hinterkantenelementen des jeweiligen Hinterkantenelementsatzes aufweist. Die Größen dieser beiden Serrations (geringste Radiusposition und größte Radiusposition innerhalb eines Hinterkantenelementsatzes) sind in dieser Ausführungsform in jedem der Hinterkantenelementsätze gleich, oder nehmen mit zunehmender Radiusposition, an der der jeweilige Hinterkantenelementsatz am Rotorblatt angeordnet ist, ab.

Eine Kombination dieser Optionen ist ebenfalls denkbar, sodass die Größe dieser Serrations nicht in radialer Richtung in Richtung Rotorblattspitze von Hinterkantenelementsatz zu Hinterkantenelementsatz abnimmt, sondern zwischen manchen Hinterkantenelementsätzen gleichbleibt.

Dies ermöglicht eine verbesserte lokale Anpassung der aerodynamischen Eigenschaften und Stabilitätseigenschaften eines Rotorblatts, wobei sich lokal auf einzelne Positionen auf dem Rotorblatt bezieht.

Die obige Variante bei der jeder Hinterkantenelementsatz zwei Arten jeweils gleicher Serrations umfasst, die alternierend in Rotorblattlängsrichtung angeordnet sind, kann ferner vorteilhafterweise so ausgeführt werden, dass die Länge der einzelnen Serrations der Hinterkantenelementsätze von der Serration, die im jeweiligen Hinterkantenelemensatz die geringste Radiusposition aufweist, bis zur Serration, die im selben Hinterkantenelementsatz die größte Radiusposition aufweist, in radialer Richtung unter den Hinterkantenelementsätzen entsprechend einer gedämpften Sinus-Funktion variiert.

In dieser vorteilhaften Ausführungsform weisen also alle Hinterkantenelementsätze zwei Arten von alternierend angeordneten Hinterkantenelemente auf. Innerhalb jedem dieser Hinterkantenelementsätze ist die Größe einer Art von Serrations konstant. Jeder Hinterkantenelementsatz umfasst also Serrations in zwei Größen, entsprechend der jeweiligen Art von Serrations, beispielsweise Serrations einer ersten Größe und Serrations einer zweiten Größe, die kleiner als die erste Größe ist.

Die Größe der je zwei Arten von Serrations pro Hinterkantenelement variiert in dieser Ausführungsform zwischen den Hinterkantenelementsätze und zwar derart, dass in radialer Richtung in Richtung Rotorblattspitze die Größenänderung der zwei Arten von Serrations von Hinterkantenelementsatz zu Hinterkantenelementsatz entsprechend einer gedämpften Sinus-Funktion variiert. Eine gedämpfte Sinus-Funktion zeichnet sich dadurch aus, dass eine Amplitude der Sinusfunktion in diesem Fall über die eine Distanz in radialer Richtung abnimmt.

Dies führt zu einer ausgeprägten Variation der effektiven Blatttiefe entlang der Rotorblattlängsrichtung.

Gemäß einer weiteren bevorzugten Variante der obigen Ausführungsform des ersten Aspekts der Erfindung weist ein oder jeder Hinterkantenelementsatz mindestens eine Hauptserration auf, deren Länge größer ist als die der mindestens einen weiteren Serration des jeweiligen Hinterkantenlementsatzes, variiert die Länge der Hauptserrations der Hinterkantensätze, und ist die Länge der mindestens einen weiteren Serration der Hinterkantenelementsätze unter den Hinterkantenelementsätzen gleich.

In dieser Ausführungsform stimmt die Größe einer kleineren Serration innerhalb jedes der Hinterkantenelementsätze überein. Lediglich die Größe einer größeren Serration innerhalb jedes der Hinterkantenelementsätze, auch Hauptserration genannt, variiert zwischen den Hinterkantenelementsätzen.

Dies ermöglicht eine Anpassung der Größe der kleineren Serration zur aeroakustischen Optimierung des Rotorblatts und gleichzeitig die Ausbildung großer Variationen in der effektiven Blatttiefe durch die Hauptserrations.

Gemäß einer weiteren bevorzugten Variante der obigen Ausführungsform des ersten Aspekts der Erfindung weisen die Serrations eine Verdrillung auf, insbesondere eine Verdrillung, die abhängig von der Radiusposition variiert, insbesondere mit zunehmender Radiusposition zunimmt, wobei es sich bei der Verdrillung um eine Drehung der Form der Serration um eine Achse parallel zur Profiltiefenrichtung handelt, die mit zunehmender Distanz zur Hinterkante zunimmt.

In dieser Ausführungsform bietet die Verdrillung der Serrations eine zusätzliche Optimierungsoption, sodass die aeroakustischen Eigenschaften und die Stabilitätseigenschaften des Rotorblatts weiter optimiert werden. Die Verdrillung beschreibt dabei eine Drehung der Form der Serration um eine Achse parallel zur Profiltiefenrichtung um einen Winkel, wobei sich der Winkel zwischen einer Oberfläche der Form der Serration und der Hinterkante aufspannt. Je größer bzw. stärker die Verdrillung, desto größer der Winkel der Oberfläche der Form der Serration zur Hinterkante.

Die Verdrillung ermöglicht eine zusätzliche Vergrößerung der Variationen der effektiven Blatttiefe.

Gemäß einer weiteren bevorzugten Variante der obigen Ausführungsform des ersten Aspekts der Erfindung weist die Serrations eine Kontur auf, und weist mindestens eine Serration eines Hinterkantenelementsatzes eine Geometrieänderung der Kontur zu einer weiteren Serration desselben Hinterkantenelementsatzes auf, wobei die Geometrieänderung umfasst: die Änderung wenigstens eines Winkels, der von zwei Kanten einer Serration aufgespannt wird, und/oder die Änderung wenigstens einer geraden Kante zu einer konkaven oder konvexen Kante.

Eine Serration ist üblicherweise gemäß einer Dreiecks-Form ausgestaltet, wobei zwei Spitzen dieser Dreiecks-Form angebracht an dem Rotorblatt mit der Hinterkante in Kontakt stehen und eine dritte Spitze der Dreiecks-Form sich im Wesentlichen in Profiltiefenrichtung von der Hinterkante erstreckt und eine Vergrößerung der effektiven Blatttiefe herbeiführt.

In dieser vorteilhaften Variante weist mindestens eine der Serrations eines Hinterkantenelementsatzes eine Geometrieänderung der Kontur auf. Als Kontur wird dabei insbesondere ein Rand der Form der Serration verstanden. Weist die Serration beispielsweise eine Dreiecks-Form auf, so stellt der Umfang dieser Dreiecks-Form entlang der drei Spitzen die Kontur der Serration dar.

Eine Geometrieänderung der Kontur umfasst in dieser Variante beispielsweise eine zusätzliche Spitze in der Kontur. In dem Beispiel der Serrations ausgestaltet in Dreiecks-Form stellt sich die Geometrieänderung beispielsweise als zwei zusätzliche Spitzen dar, die an je einer der beiden Seiten der Kanten, die von der Hinterkante in Richtung beabstandeter Spitze führen, angeordnet sind, sodass eine Serration mit dieser Geometrieänderung keine Dreiecks-Form aufweist, sondern die Form mit fünf Spitzen.

Zusätzlich oder alternativ umfasst eine Geometrieänderung nach dieser Variante die Änderung wenigstens einer geraden Kante mindestens einer Serration eines Hinterkantenelementsatzes zu einer konkaven oder konvexen Kante. Im Beispiel der Serrations ausgestaltet in Dreiecks-Form sind bei einer Serration mit Geometrieänderung beispielsweise die Kanten, die von der Hinterkante in Richtung beabstandeter Spitze führen, konkav oder konvex ausgestaltet, sodass diese Serration keine klassische Dreiecks-Form mehr aufweist.

Diese Geometrieänderungen ermöglichen eine verbesserte Optimierung des Rotorblatts bezüglich der aeroakustischen Eigenschaften und der Stabilitätseigenschaften des Rotorblatts.

Die obige Variante kann ferner vorteilhafterweise so ausgeführt werden, dass die Krümmung der von der Hinterkante des Rotorblatts zu einer Spitze der Serrations zulaufenden Kanten der Serrations eines Hinterkantenelementsatzes in radialer Richtung von Serration zu Serration von konvex zu konkav übergehend ausgebildet ist.

In dieser vorteilhaften Ausführungsform werden die Serrations eines Hinterkantenelementsatzes angeordnet an dem Rotorblatt in radialer Richtung beschrieben. Die Kanten einer Serration des Hinterkantenelementsatzes mit einer geringsten Radiusposition, die von der Hinterkante in Richtung beabstandeter Spitze der Serration führen sind dabei konvex ausgestaltet und weisen verglichen mit den weiteren Serrations des Hinterkantenelementsatzes eine stärkste konvexe Krümmung auf. Die Stärke der Krümmung der Kanten nimmt dabei in radialer Richtung von Serration zu Serration innerhalb des Hinterkantenelementsatzes ab. Zumindest eine Serration mit größter Radiusposition innerhalb des Hinterkantenelementsatzes weist eine konkave Krümmung der Kanten auf. Umfasst ein Hinterkantenelementsatz mehrere Serration mit konkaver Krümmung der Kanten, weist die Serration mit der größten Radiusposition die stärkste konkave Krümmung der Kanten auf.

Die Krümmung der Kontur der Serrations stellt eine weitere Optimierungsmöglichkeit der aeroakustischen Eigenschaften und der Stabilitätseigenschaften eines Rotorblatts dar und ermöglicht die Ausbildung von zusätzlichen Variationen der effektiven Blatttiefe.

Gemäß einer weiteren bevorzugten Variante der obigen Ausführungsform des ersten Aspekts der Erfindung oder einer weiteren vorteilhaften Ausführung der obigen Varianten weisen die Serrations einen Einbauwinkel auf, der sich zwischen der Richtung, in der sich die Länge der Serrations erstreckt und der Hinterkante des Rotorblattes aufspannt und der insbesondere abhängig von der Radiusposition oder Länge der Serrations, variiert.

Der Einbauwinkel spannt sich dabei zwischen einer Ebene, die durch einen Punkt der maximalen Ausdehnung der Serration von der Hinterkante aus und der Hinterkante ausgebildet wird, und der Hinterkante, insbesondere der Profiltiefenrichtung an der Hinterkante, auf.

Die Variation des Einbauwinkels der Serrations in radialer Richtung stellt eine weitere Optimierungsmöglichkeit der aerodynamischen Eigenschaften und Stabilitätseigenschaften des Rotorblatts dar.

Beispielsweise kann der Einbauwinkel von kleineren Serrations größer ausgeführt werden, als der Einbauwinkel von respektive größeren Serrations. Darüber hinaus kann generell der Einbauwinkel der Serrations abhängig von ihrer Einbauposition oder Größe variieren.

Dadurch kann auch bei stark sprunghafter geometrischer Ausgestaltung der Serrationgeometrie bzw. großen Variationen der effektiven Blatttiefe eine gleichmäßige Auftriebsverteilung über das Rotorblatt gewährleistet werden.

Die obige Variante kann ferner vorteilhafterweise so ausgeführt werden, dass der Einbauwinkel mit zunehmender Länge der Serrations abnimmt.

Gemäß einer weiteren vorteilhaften Ausführungsform des ersten Aspekts der Erfindung tritt an einem Übergang zwischen zwei Hinterkantenelementsätzen eine sprunghafte Vergrößerung der Hinterkantenelemente auf.

In dieser Ausführungsform sind mindestens zwei Hinterkantenelementsätze nebeneinander in radialer Richtung an der Hinterkante des Rotorblatts angebracht. Die Hinterkantenelementsätze können dabei direkt nebeneinander, ohne Abstand zwischen den Hinterkantenelementsätze angebracht sein, aber auch beabstandet voneinander, da bei einem Abstand zwischen den Hinterkantenelementsätzen ebenfalls bei einem Übergang von einem Bereich in dem Abstand zu einem Bereich in dem einer der Hinterkantenelementsätze angeordnet ist, ebenfalls eine sprunghafte Vergrößerung der Hinterkantenelemente auftritt.

Vorzugsweise sind die Hinterkantenelementsätze nicht in radialer Richtung zueinander beabstandet, da dies negative Auswirkungen auf die aeroakustischen Eigenschaften und Stabilitätseigenschaften des Rotorblatts hat.

Als sprunghafte Vergrößerung wird in dieser Ausführungsform insbesondere ein Anstieg in der Größe benachbarter Serrations in radialer Richtung in Richtung Rotorblattspitze um mindestens 2 % einer lokalen Profiltiefe an dem Übergang verstanden. Die benachbarten Serrations sind dabei Teil von je einem zweier benachbarter Hinterkantenelementsätze.

Diese sprunghafte Vergrößerung führt zu einer größeren Variation der effektiven Blatttiefe und wirkt sich positiv auf die aeroakustischen Eigenschaften und Stabilitätseigenschaften des Rotorblatts aus.

Gemäß einem zweiten Aspekt der Erfindung wird die obige Aufgabe durch ein Verfahren zur Herstellung und/oder Wartung eines Rotorblattes für eine Windenergieanlage gelöst, wobei sich das Rotorblatt von einer Rotorblattwurzel bis zu einer Rotorblattspitze in einer Rotorblattlängsrichtung mit einer Rotorblattlänge erstreckt und dabei eine sich zwischen einer Vorderkante und einer Hinterkante einstellenden Profiltiefe aufweist und eine Radiusposition den radialen Abstand zu einer Drehachse angibt, um die das Rotorblatt bei Betrieb der Windenergieanlage rotiert, umfassend: Anordnen von mindestens zwei Hinterkantenelementsätzen an der Hinterkante, wobei jeder Hinterkantenelementsatz mindestens zwei Hinterkantenelemente umfasst, die voneinander unterschiedlich ausgebildet sind, dadurch gekennzeichnet, dass mindestens ein Hinterkantenelement, das in Rotorblattlängsrichtung näher an der Rotorblattspitze angeordnet ist, größer ist als ein Hinterkantenelement, das in Rotorblattlängsrichtung näher an der Rotorblattwurzel angeordnet ist.

Das Warten eines Rotorblatts umfasst dabei insbesondere ein Nachrüsten eines Rotorblatts. Hierbei wurde das Rotorblatt vorzugsweise bereits in Betrieb genommen.

Das Anordnen der mindestens zwei Hinterkantenelementsätze umfasst jegliche Art der Befestigung an dem Rotorblatt, insbesondere Kleben, Schrauben und Laminieren, derart, dass die Hinterkantenelementsätze in einem Betrieb des Rotorblatts an einer Windenergieanlage den auftretenden Kräften Stand halten und nicht vom Rotorblatt abfallen.

Gemäß einem weiteren Aspekt der Erfindung wird die obige Aufgabe durch eine Windenergieanlage mit einem oder mehreren Rotorblättern nach dem ersten Aspekt der Erfindung gelöst.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration einer Windenergieanlage
- Fig. 2: eine schematische Darstellung zur Illustration eines Windparks umfassend mehrere Windenergieanlagen
- Fig. 3: eine schematische Darstellung zur Illustration einer bekannten Ausführung eines Rotorblatts

- Fig. 4: eine schematische Darstellung zur Illustration eines ersten Ausführungsbeispiels des Rotorblatts
- Fig. 5: eine weitere schematische Darstellung zur Illustration eines weiteren Ausführungsbeispiels des Rotorblatts
- Fig. 6: eine weitere schematische Darstellung zur Illustration eines weiteren Ausführungsbeispiels des Rotorblatts
- Fig. 7: eine weitere schematische Darstellung zur Illustration eines weiteren Ausführungsbeispiels des Rotorblatts
- Fig. 8: eine weitere schematische Darstellung zur Illustration eines weiteren Ausführungsbeispiels des Rotorblatts
- Fig. 9: eine weitere schematische Darstellung zur Illustration eines weiteren Ausführungsbeispiels des Rotorblatts
- Fig. 10: eine weitere schematische Darstellung zur Illustration eines weiteren Ausführungsbeispiels des Rotorblatts
- Fig. 11: eine weitere schematische Darstellung zur Illustration eines weiteren Ausführungsbeispiels des Rotorblatts
- Fig. 12: eine weitere schematische Darstellung zur Illustration eines weiteren Ausführungsbeispiels des Rotorblatts
- Fig. 13: eine weitere schematische Darstellung zur Illustration eines weiteren Ausführungsbeispiels des Rotorblatts

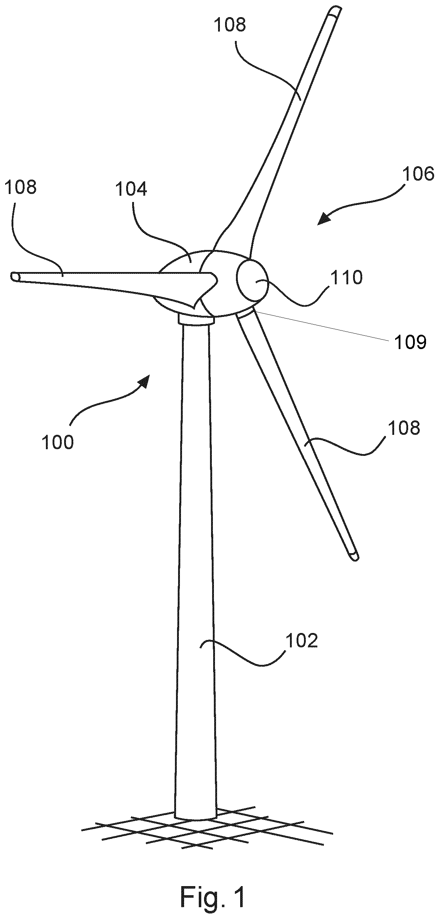

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

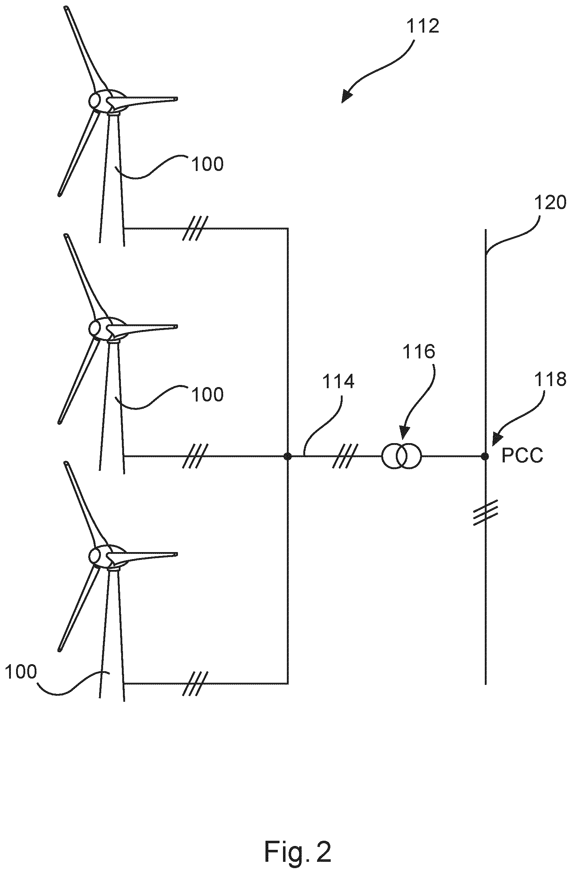

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

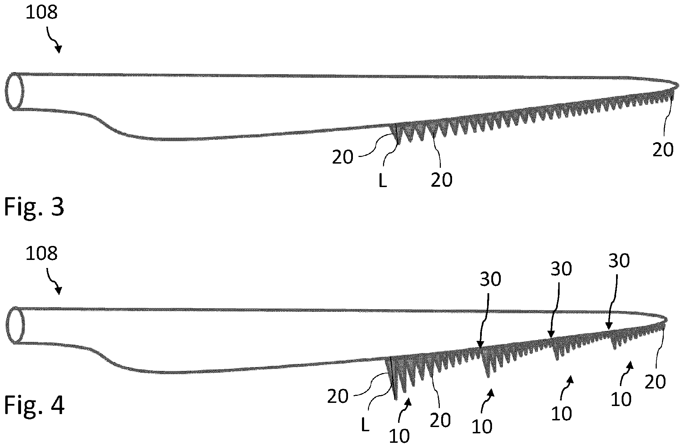

Figur 3 zeigt eine schematische Darstellung zur Illustration einer bekannten Ausführung eines Rotorblatts 108. An diesem Rotorblatt 108 sind gemäß einer bekannten Lösung zur Schallreduzierung Serrations 20 mit sich kontinuierlich in radialer Richtung reduzierender Serrationslänge L angebracht. Die folgenden Figuren zeigen Ausführungsformen eines erfindungsgemäßen Rotorblatts 108, das gegenüber dieser bekannten Ausführung eines Rotorblatts 108 in Figur 3 verbesserte aeroakustische Eigenschaften und/oder Stabilitätseigenschaften, insbesondere im Stillstand aufweisen.

Figur 4 zeigt eine schematische Darstellung zur Illustration eines ersten Ausführungsbeispiels eines erfindungsgemäßen Rotorblatts 108. In der in Figur 4 dargestellten Ausführungsform umfasst das Rotorblatt vier Hinterkantenelementsätze 10 umfassend je zwölf Hinterkantenelemente in Form von Serrations 20. In dieser Ausführungsform weist in jedem der Hinterkantenelementsätze 10 die Serration 20 mit der jeweils geringsten Radiusposition die größte Größe, in diesem Fall Serrationslänge L, auf.

Die Länge L der Serrations 20 nimmt dann innerhalb der Hinterkantenelementsätze 10 von Serration 20 zu Serration 20 in radialer Richtung ab, bis schließlich die Serration 20 mit der jeweils größten Radiusposition die kleinste Länge L aufweist. Durch die sukzessive Anordnung der Hinterkantenelementsätze 10 an der Hinterkante des Rotorblatts 108 entsteht eine abgestufte Kontur der Hinterkante und zumindest an den Stufen, den Übergängen 30 zwischen den jeweiligen Hinterkantenelementsätzen 10, eine große Variation in der effektiven Blatttiefe des Rotorblatts 108.

Die relative Größe der Serrations 20 zu den jeweils anderen Serrations 20 innerhalb eines Hinterkantenelementsatzes 10 ist über die Hinterkantenelementsätze 10 konstant. Die absolute Größe der jeweiligen Serrations 20, beispielsweise jeweils der Serration 20 mit der geringsten Radiusposition innerhalb jedes Hinterkantenelementsatzes, nimmt von Hinterkantenelementsatz 10 zu Hinterkantenelementsatz 10 in Richtung Rotorblattspitze ab.

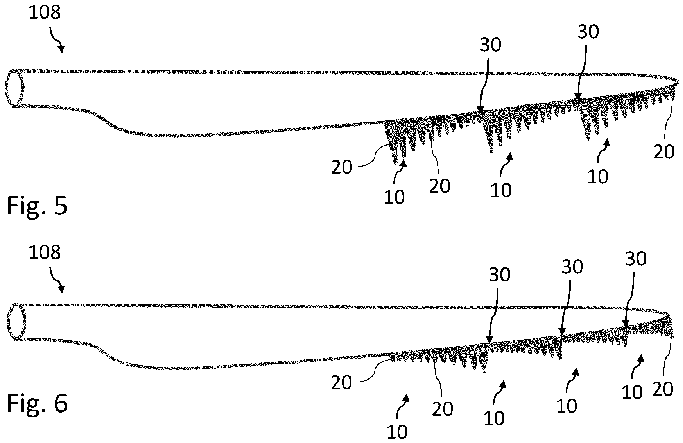

Figur 5 zeigt eine schematische Darstellung zur Illustration eines weiteren Ausführungsbeispiels eines erfindungsgemäßen Rotorblatts 108. In der in Figur 5 dargestellten Ausführungsform umfasst das Rotorblatt 108 drei Hinterkantenelementsätze 10 umfassend je zwölf Hinterkantenelemente in Form von Serrations 20. In dieser Ausführungsform weist in jedem der Hinterkantenelementsätze 10 die Serration 20 mit der jeweils geringsten Radiusposition die größte Größe, in diesem Fall Serrationslänge L, auf.

Die Länge L der Serrations 20 nimmt dann innerhalb der Hinterkantenelementsätze 10 von Serration 20 zu Serration 20 in radialer Richtung ab, bis schließlich die Serration 20 mit der jeweils größten Radiusposition die kleinste Länge L aufweist. Durch die sukzessive Anordnung der Hinterkantenelementsätze 10 an der Hinterkante des Rotorblatts 108 entsteht eine abgestufte Kontur der Hinterkante und zumindest an den Stufen, den Übergängen 30 zwischen den jeweiligen Hinterkantenelementsätzen 10, eine große Variation in der effektiven Blatttiefe des Rotorblatts 108.

Die relative Größe der Serrations 20 zu den jeweils anderen Serrations 20 innerhalb eines Hinterkantenelementsatzes 10 ist über die Hinterkantenelementsätze 10 konstant. Die absolute Größe der jeweiligen Serrations 20, beispielsweise jeweils der Serration 20 mit der geringsten Radiusposition innerhalb jedes Hinterkantenelementsatzes, ist in diesem Ausführungsbeispiel über die Hinterkantenelementsätze 10 ebenfalls konstant. An das Rotorblatt 108 wurden hier also drei identische Hinterkantenelementsätze 10 angebracht.

Figur 6 zeigt eine schematische Darstellung zur Illustration eines weiteren Ausführungsbeispiels eines erfindungsgemäßen Rotorblatts 108.

In der in Figur 6 dargestellten Ausführungsform umfasst das Rotorblatt 108 vier Hinterkantenelementsätze 10 umfassend je zwölf Hinterkantenelemente in Form von Serrations 20. In dieser Ausführungsform weist in jedem der Hinterkantenelementsätze 10 die Serration 20 mit der jeweils geringsten Radiusposition die geringste Größe, in diesem Fall Serrationslänge L, auf. Die Länge L der Serrations 20 nimmt dann innerhalb der Hinterkantenelementsätze 10 von Serration 20 zu Serration 20 in radialer Richtung zu, bis schließlich die Serration 20 mit der jeweils größten Radiusposition die größte Länge L aufweist. Durch die sukzessive Anordnung der Hinterkantenelementsätze 10 an der Hinterkante des Rotorblatts 108 entsteht eine abgestufte Kontur der Hinterkante und zumindest an den Stufen, den Übergängen 30 zwischen den jeweiligen Hinterkantenelementsätzen 10, eine große Variation in der effektiven Blatttiefe des Rotorblatts 108.

Die relative Größe der Serrations 20 zu den jeweils anderen Serrations 20 innerhalb eines Hinterkantenelementsatzes 10 ist über die Hinterkantenelementsätze 10 konstant. Die absolute Größe der jeweiligen Serrations 20, beispielsweise jeweils der Serration 20 mit der geringsten Radiusposition innerhalb jedes Hinterkantenelementsatzes, nimmt von Hinterkantenelementsatz 10 zu Hinterkantenelementsatz 10 in Richtung Rotorblattspitze ab.

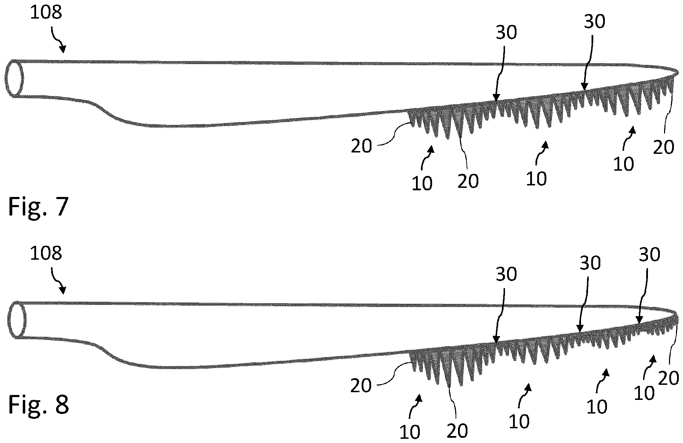

Figur 7 zeigt eine schematische Darstellung zur Illustration eines weiteren Ausführungsbeispiels eines erfindungsgemäßen Rotorblatts 108. In der in Figur 7 dargestellten Ausführungsform umfasst das Rotorblatt 108 drei Hinterkantenelementsätze 10 umfassend je zehn Hinterkantenelemente in Form von Serrations 20. In dieser Ausführungsform weist in jedem der Hinterkantenelementsätze 10 die Serration 20 mit der jeweils geringsten Radiusposition die geringste Größe, in diesem Fall Serrationslänge L, auf.

Die Länge L der Serrations 20 nimmt dann innerhalb der Hinterkantenelementsätze 10 von Serration 20 zu Serration 20 in radialer Richtung in Form einer Sinus-Funktion zunächst zu und ab einer Serration 20 mit einer größten Länge L wieder ab, bis schließlich die Serration 20 mit der jeweils größten Radiusposition wieder die gleiche Länge L wie die Serration 20 mit der geringsten Radiusposition in dem jeweiligen Hinterkantenelementsatz 10, aufweist. Durch die Sinus-Funktion förmige Ausgestaltung der Serrationslänge L der Serrations 20 der Hinterkantenelementsätze 10 an der Hinterkante des Rotorblatts 108 entstehen Variationen in der effektiven Blatttiefe des Rotorblatts 108.

Die relative Größe der Serrations 20 zu den jeweils anderen Serrations 20 innerhalb eines Hinterkantenelementsatzes 10 ist über die Hinterkantenelementsätze 10 konstant. Die absolute Größe der jeweiligen Serrations 20, beispielsweise jeweils der Serration 20 mit der geringsten Radiusposition innerhalb jedes Hinterkantenelementsatzes, ist in diesem Ausführungsbeispiel über die Hinterkantenelementsätze 10 ebenfalls konstant. An das Rotorblatt 108 wurden hier also drei identische Hinterkantenelementsätze 10 angebracht. Figur 8 zeigt eine schematische Darstellung zur Illustration eines weiteren Ausführungsbeispiels eines erfindungsgemäßen Rotorblatts 108. In der in Figur 8 dargestellten Ausführungsform umfasst das Rotorblatt 108 vier Hinterkantenelementsätze 10 umfassend je zehn Hinterkantenelemente in Form von Serrations 20. In dieser Ausführungsform weist in jedem der Hinterkantenelementsätze 10 die Serration 20 mit der jeweils geringsten Radiusposition die geringste Größe, in diesem Fall Serrationslänge L, auf.

Die Länge L der Serrations 20 nimmt dann innerhalb der Hinterkantenelementsätze 10 von Serration 20 zu Serration 20 in radialer Richtung in Form einer Sinus-Funktion zunächst zu und ab einer Serration 20 mit einer größten Länge L wieder ab, bis schließlich die Serration 20 mit der jeweils größten Radiusposition wieder die gleiche Länge L wie die Serration 20 mit der geringsten Radiusposition in dem jeweiligen Hinterkantenelementsatz 10, aufweist. Durch die Sinus-Funktion förmige Ausgestaltung der Serrationslänge L der Serrations 20 der Hinterkantenelementsätze 10 an der Hinterkante des Rotorblatts 108 entstehen Variationen in der effektiven Blatttiefe des Rotorblatts 108.

Die relative Größe der Serrations 20 zu den jeweils anderen Serrations 20 innerhalb eines Hinterkantenelementsatzes 10 ist über die Hinterkantenelementsätze 10 konstant. Die absolute Größe der jeweiligen Serrations 20, beispielsweise jeweils der Serration 20 mit der geringsten Radiusposition innerhalb jedes Hinterkantenelementsatzes, nimmt von Hinterkantenelementsatz 10 zu Hinterkantenelementsatz 10 in Richtung Rotorblattspitze ab.

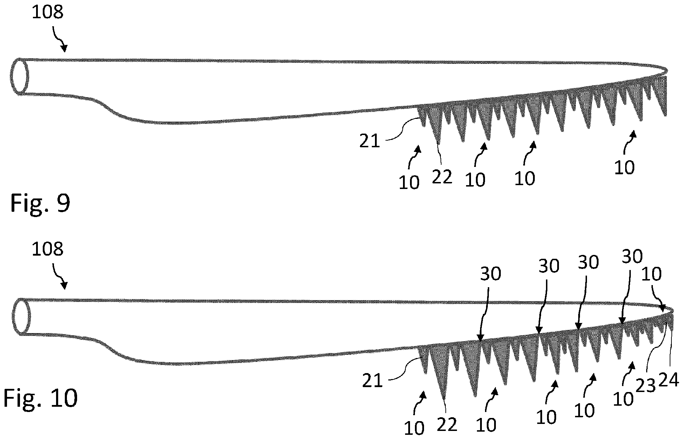

Figur 9 zeigt eine schematische Darstellung zur Illustration eines weiteren Ausführungsbeispiels eines erfindungsgemäßen Rotorblatts 108. In der in Figur 9 dargestellten Ausführungsform umfasst das Rotorblatt 108 fünf Hinterkantenelementsätze 10 umfassend je vier Hinterkantenelemente in Form von Serrations 20. In dieser Ausführungsform weist jeder der Hinterkantenelementsätze 10 zwei Arten von Serration 20 mit unterschiedlicher Größe, in diesem Fall Serrationslänge L, auf.

Eine erste Art von Serrations 21 weist dabei eine geringere Länge L auf, als eine zweite Art von Serrations 22. Jeder Hinterkantenelementsatz 10 umfasst zwei Serrations 21 der ersten Art und zwei Serrations 22 der zweiten Art, die in radialer Richtung abwechselnd angeordnet sind.

Durch die abwechselnde Anordnung der Serrations 21, 22 der Hinterkantenelementsätze 10 an der Hinterkante des Rotorblatts 108 entstehen Variationen in der effektiven Blatttiefe des Rotorblatts 108. Die relative Größe der Serrations 21, 22 zu den jeweils anderen Serrations 21, 22 innerhalb eines Hinterkantenelementsatzes 10 ist über die Hinterkantenelementsätze 10 konstant. Die absolute Größe der Serrations 21, 22, ist in diesem Ausführungsbeispiel über die Hinterkantenelementsätze 10 ebenfalls konstant. An das Rotorblatt 108 wurden hier also fünf identische Hinterkantenelementsätze 10 angebracht.

Figur 10 zeigt eine schematische Darstellung zur Illustration eines weiteren Ausführungsbeispiels eines erfindungsgemäßen Rotorblatts 108. In der in Figur 10 dargestellten Ausführungsform umfasst das Rotorblatt 108 sechs Hinterkantenelementsätze 10 umfassend je vier Hinterkantenelemente in Form von Serrations 20. In dieser Ausführungsform weist jeder der Hinterkantenelementsätze 10 zwei Arten von Serration 20 mit unterschiedlicher Größe, in diesem Fall Serrationslänge L, auf.

Eine erste Art von Serrations 21 weist dabei eine geringere Länge L auf, als eine zweite Art von Serrations 22. Jeder Hinterkantenelementsatz 10 umfasst zwei Serrations 21 einer ersten Art und zwei Serrations 22 einer zweiten Art, die in radialer Richtung abwechselnd angeordnet sind. Durch die abwechselnde Anordnung der Serrations 21, 22 der Hinterkantenelementsätze 10 an der Hinterkante des Rotorblatts 108 entstehen Variationen in der effektiven Blatttiefe des Rotorblatts 108.

Die relative Größe der Serrations 21, 22 zu den jeweils anderen Serrations 21, 22 innerhalb eines Hinterkantenelementsatzes 10 ist über die Hinterkantenelementsätze 10 konstant. Die absolute Größe der jeweiligen Serrations 21, 22, beispielsweise jeweils der Serrations 21 erster Art und der Serrations 22 einer zweiten Art in jedem Hinterkantenelementsatz, nimmt von Hinterkantenelementsatz 10 zu Hinterkantenelementsatz 10 in Richtung Rotorblattspitze ab.

Der Hinterkantenelementsatz 10, der die größte Radiusposition aufweist umfasst verglichen mit den anderen Hinterkantenelementsätzen 10 die kleinsten Serrations 23 erster Art und die kleinsten Serrations 24 zweiter Art. Durch die abnehmende absolute Größe der jeweiligen Serrations 21, 22 in Richtung Rotorblattspitze, ergeben sich zusätzliche Variationen in der effektiven Blatttiefe an den Übergängen 30 zwischen den einzelnen Hinterkantenelementsätzen 10.

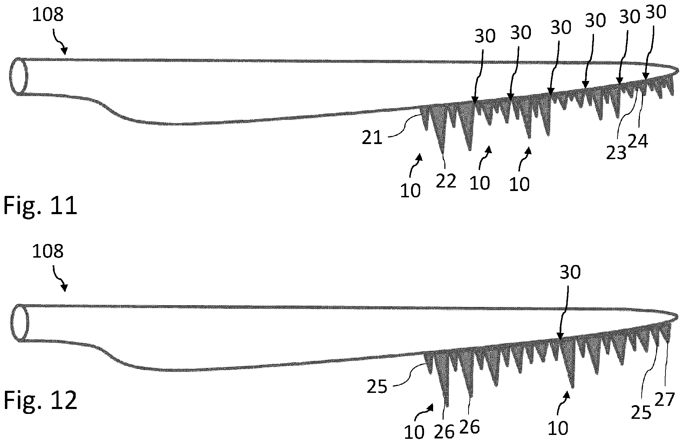

Figur 11 zeigt eine schematische Darstellung zur Illustration eines weiteren Ausführungsbeispiels eines erfindungsgemäßen Rotorblatts 108. In der in Figur 11 dargestellten Ausführungsform umfasst das Rotorblatt 108 sieben Hinterkantenelementsätze 10 umfassend je vier Hinterkantenelemente in Form von Serrations 20. In dieser Ausführungsform weist jeder der Hinterkantenelementsätze 10 zwei Arten von Serration 20 mit unterschiedlicher Größe, in diesem Fall Serrationslänge L, auf. Eine erste Art von Serrations 21 weist dabei eine geringere Länge L auf, als eine zweite Art von Serrations 22.

Jeder Hinterkantenelementsatz 10 umfasst zwei Serrations 21 einer ersten Art und zwei Serrations 22 einer zweiten Art, die in radialer Richtung abwechselnd angeordnet sind. Durch die abwechselnde Anordnung der Serrations 21, 22 der Hinterkantenelementsätze 10 an der Hinterkante des Rotorblatts 108 entstehen Variationen in der effektiven Blatttiefe des Rotorblatts 108. Die relative Größe der Serrations 21, 22 zu den jeweils anderen Serrations 21, 22 innerhalb eines Hinterkantenelementsatzes 10 ist über die Hinterkantenelementsätze 10 konstant. Die absolute Größe der jeweiligen Serrations 21, 22, beispielsweise jeweils der Serrations 21 erster Art und der Serrations 22 einer zweiten Art in jedem Hinterkantenelementsatz, variiert in Richtung Rotorblattspitze in Form einer gedämpften Sinus-Funktion. In diesem Beispiel weist der Hinterkantenelementsatz 10, der die zweitgrößte Radiusposition aufweist verglichen mit den anderen Hinterkantenelementsätzen 10 die kleinsten Serrations 23 erster Art und die kleinsten Serrations 24 zweiter Art auf, da in radialer Richtung folgend noch ein weiterer Hinterkantenelementsatz 1ß angeordnet ist, dessen Serrationlängen L entsprechend eines Verlaufs einer Sinus-Funktion wieder ansteigt.

Würde man an diesen letzten Hinterkantenelementsatz 10 konsistent einen weiteren Hinterkantenelementsatz 10 anordnen, wären die Serrationlängen L der Serrations 21, 22 dieses Hinterkantenelementsatzes 10 die kleinsten Serrations 23, 24 unter allen Hinterkantenelementsätzen 10, gemäß dem Verlauf einer gedämpften Sinus-Funktion. Durch die abnehmende absolute Größe der jeweiligen Serrations 21, 22 in Richtung Rotorblattspitze, ergeben sich zusätzliche Variationen in der effektiven Blatttiefe an den Übergängen 30 zwischen den einzelnen Hinterkantenelementsätzen 10.

Figur 12 zeigt eine schematische Darstellung zur Illustration eines weiteren Ausführungsbeispiels eines erfindungsgemäßen Rotorblatts 108. In der in Figur 12 dargestellten Ausführungsform umfasst das Rotorblatt 108 zwei Hinterkantenelementsätze 10 umfassend je zehn Hinterkantenelemente in Form von Serrations 20. In dieser Ausführungsform weist jeder der Hinterkantenelementsätze 10 mehrere Hauptserrations 26 sowie weitere Serrations 25 auf. Die Serrations 25 weisen dabei eine konstante geringere Länge L auf, als eine Hauptserrations 26.

Die Länge L der Hauptserrations 26 nimmt in jedem der Hinterkantenelementsätze 10 mit zunehmender Radiusposition ab, bis schließlich eine Hauptserration 27 mit der größten Radiusposition aller Hauptserrations 26 eine geringste Länge L aller Hauptserrations 26 aufweist. Jeder Hinterkantenelementsatz 10 umfasst fünf Serrations 25 und fünf Hauptserrations 26, die in radialer Richtung abwechselnd angeordnet sind. Durch die abwechselnde Anordnung der Serrations 25,26 der Hinterkantenelementsätze 10 an der Hinterkante des Rotorblatts 108 entstehen Variationen in der effektiven Blatttiefe des Rotorblatts 108.

Die relative Größe der Hauptserrations 26 zu den anderen Serrations 25 nimmt mit zunehmender Radiusposition von Hinterkantenelementsatz 10 zu Hinterkantenelementsatz 10 ab. Die absolute Größe der Serrations 25 bleibt in radialer Richtung konstant. Die absolute Größe der jeweiligen Hauptserrations 26, beispielsweise jeweils der Hauptserration 26 mit der geringsten Radiusposition innerhalb jedes Hinterkantenelementsatzes, nimmt in radialer Richtung von Hinterkantenelementsatz 10 zu Hinterkantenelementsatz 10 ab.

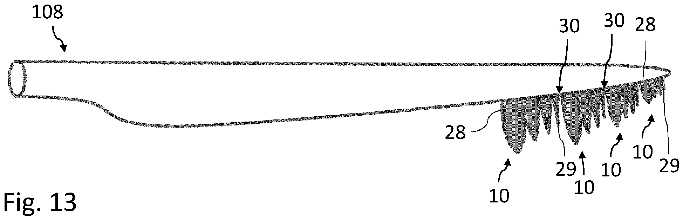

Figur 13 zeigt eine schematische Darstellung zur Illustration eines ersten Ausführungsbeispiels eines erfindungsgemäßen Rotorblatts 108. In der in Figur 13 dargestellten Ausführungsform umfasst das Rotorblatt vier Hinterkantenelementsätze 10 umfassend je vier Hinterkantenelemente in Form von Serrations 20. In dieser Ausführungsform weist in jedem der Hinterkantenelementsätze 10 die Serration 28 mit der jeweils geringsten Radiusposition die größte Größe, in diesem Fall Serrationslänge L, auf.

Die Länge L der Serrations 20 nimmt dann innerhalb der Hinterkantenelementsätze 10 von Serration 20 zu Serration 20 in radialer Richtung ab, bis schließlich die Serration 29 mit der jeweils größten Radiusposition die kleinste Länge L aufweist. Durch die sukzessive Anordnung der Hinterkantenelementsätze 10 an der Hinterkante des Rotorblatts 108 entsteht eine abgestufte Kontur der Hinterkante und zumindest an den Stufen, den Übergängen 30 zwischen den jeweiligen Hinterkantenelementsätzen 10, eine große Variation in der effektiven Blatttiefe des Rotorblatts 108. Die relative Größe der Serrations 20 zu den jeweils anderen Serrations 20 innerhalb eines Hinterkantenelementsatzes 10 ist über die Hinterkantenelementsätze 10 konstant.

Die absolute Größe der jeweiligen Serrations 20, beispielsweise jeweils der Serration 20 mit der geringsten Radiusposition innerhalb jedes Hinterkantenelementsatzes, nimmt von Hinterkantenelementsatz 10 zu Hinterkantenelementsatz 10 in Richtung Rotorblattspitze ab. Zusätzlich weisen die Serrations 20 eine Konturänderung auf, die sich mit zunehmender Radiusposition innerhalb eines Hinterkantenelementsatzes 10 zunehmend ändert. In jedem der Hinterkantenelementsätze 10 weist die Serration 28 mit der jeweils geringsten Radiusposition eine stärkste konvexe Krümmung der Kontur auf, die sich in einer Krümmung der Kanten in Richtung Serrationspitze, dem am weitesten beabstandeten Punkt der Serration von der Hinterkante, äußert.

Mit zunehmender Radiusposition innerhalb eines Hinterkantenelementsatzes 10 nimmt diese konvexe Krümmung ab und mündet in eine konkave Krümmung der Kontur der Serrations 20. Die Serration 29 mit der jeweils größten Radiusposition innerhalb eines Hinterkantenelementsatzes 10 weist eine stärkste konkave Krümmung der Kontur auf. Diese Konturänderung führt zu zusätzlichen Variationen in der effektiven Blatttiefe, besonders an den Übergangen 30 zwischen den jeweiligen Hinterkantenelementsätzen 10. In anderen Ausführungen ist analog zu Fig. 6 und 7 auch ein Übergang von konkaver Krümmung zu konvexer Krümmung vorteilhaft.

### Bezugszeichen

- 10: Hinterkantenelementsatz
- 20: Serration
- 21: Serration einer ersten Art
- 22: Serration einer zweiten Art
- 23: kleinste Serration erster Art
- 24: kleinste Serration zweiter Art
- 25: Serration mit konstanter Größe
- 26: Erste Hauptserration
- 27: Zweite Hauptserration
- 28: Konvexe Serration
- 29: Konkave Serration
- 30: Übergang
- 100: Windenergieanlage
- 102: Turm
- 104: Gondel
- 106: Rotor
- 108: Rotorblatt
- 110: Spinner
- 112: Windpark
- 114: Parknetz

## Patentansprüche

1. Rotorblatt (108) für eine Windenergieanlage (100), wobei
sich das Rotorblatt (108) von einer Rotorblattwurzel bis zu einer Rotorblattspitze in einer Rotorblattlängsrichtung mit einer Rotorblattlänge erstreckt und dabei eine sich zwischen einer Vorderkante und einer Hinterkante in Profiltiefenrichtung einstellende Profiltiefe aufweist, wobei
eine Radiusposition den radialen Abstand in Rotorblattlängsrichtung zu einer Rotorachse angibt,
die Hinterkante des Rotorblattes mindestens zwei Hinterkantenelementsätze (10) aufweist, die eine Kontur der Hinterkante in Profiltiefenrichtung verändern,
jeder der Hinterkantenelementsätze (10) mindestens zwei Hinterkantenelemente (20) umfasst, die voneinander unterschiedlich ausgebildet sind,
**dadurch gekennzeichnet, dass**
mindestens ein Hinterkantenelement (20) eines ersten der Hinterkantenelementsätze (10), das in Rotorblattlängsrichtung näher an der Rotorblattspitze angeordnet ist, größer ist als ein Hinterkantenelement (20) eines zweiten der Hinterkantenelementsätze (10), das in Rotorblattlängsrichtung näher an der Rotorblattwurzel angeordnet ist.

2. Rotorblatt (108) nach Anspruch 1, wobei
jeder der Hinterkantenelementsätze (10) eine gleiche Anzahl an Hinterkantenelemente (20) umfasst.

3. Rotorblatt (108) nach einem der vorhergehenden Ansprüche, wobei
die Größe der Hinterkantenelemente (20) von Hinterkantenelementsatz (10) zu Hinterkantenelementsatz (10), insbesondere abhängig von der Position in Rotorblattlängsrichtung, variiert.

4. Rotorblatt (108) nach einem der vorhergehenden Ansprüche, wobei
die Größe der Hinterkantenelemente (20) eines Hinterkantenelementsatzes (10) mit zunehmender Radiusposition abnehmend ausgebildet ist und insbesondere eine Ausdehnung der Hinterkantenelemente (20) eines Hinterkantenelementsatzes (10) in Profiltiefenrichtung von der Hinterkante mit zunehmender Radiusposition abnehmend ausgebildet ist, bevorzugt derart, dass die Ausdehnung pro Radiuszunahme entsprechend einer lokalen Profiltiefe an der Radiusposition des Hinterkantenelementsatzes (10) um mindestens 0,5 % einer lokalen Profiltiefe und maximal 20 % der lokalen Profiltiefe abnimmt.

5. Rotorblatt (108) nach einem der vorhergehenden Ansprüche, wobei es sich bei den Hinterkantenelementen (20) um Serrations handelt.

6. Rotorblatt (108) nach Anspruch 5, wobei
eine effektive Blatttiefe die gemittelte Profiltiefe über die Ausdehnung einer Serration (20) in radialer Richtung angibt,
und die effektive Blatttiefe für einen Bereich zwischen zwei Radiuspositionen, die den Beginn und das Ende eines Hinterkantenelementsatzes (10) in radialer Richtung angeben, konstant bleibt,
wobei die effektive Blatttiefe für benachbarte Hinterkantenelementsätze (10) in Richtung Rotorblattspitze vorzugsweise abnimmt.

7. Rotorblatt (108) nach Anspruch 5, wobei
die Länge der Serrations (20) eines Hinterkantenelementsatzes (10) in radialer Richtung entsprechend einer Sinus-Funktion ausgebildet ist und/oder
jeder Hinterkantenelementsatz (10) zwei Arten jeweils gleicher Serrations (21, 22) umfasst, die alternierend in Rotorblattlängsrichtung angeordnet sind.

8. Rotorblatt (108) nach Anspruch 5 oder 7, wobei
die Länge der einzelnen Serrations (20) der Hinterkantenelementsätze (10) von der Serration (20), die im jeweiligen Hinterkantenelemensatz (10) die geringste Radiusposition aufweist, bis zur Serration (20), die im selben Hinterkantenelementsatz (10) die größte Radiusposition aufweist, unter den Hinterkantenelementsätzen (10) übereinstimmt oder mit zunehmender Radiusposition der Hinterkantenelementsätze (10) abnimmt.

9. Rotorblatt (108) nach Anspruch 7, wobei
die Länge der einzelnen Serrations (20) der Hinterkantenelementsätze (10) von der Serration (20), die im jeweiligen Hinterkantenelemensatz (10) die geringste Radiusposition aufweist, bis zur Serration (20), die im selben Hinterkantenelementsatz (10) die größte Radiusposition aufweist, in radialer Richtung unter den Hinterkantenelementsätzen (10) entsprechend einer gedämpften Sinus-Funktion variiert.

10. Rotorblatt (108) nach Anspruch 5, wobei
ein oder jeder Hinterkantenelementsatz (10) mindestens eine Hauptserration (26) aufweist, deren Länge größer ist als die der mindestens einen weiteren Serration (25) des jeweiligen Hinterkantenlementsatzes (10),
die Länge der Hauptserrations (26) der Hinterkantenelementsätze (10) variiert, und
die Länge der mindestens einen weiteren Serration (25) der Hinterkantenelementsätze (10) unter den Hinterkantenelementsätzen (10) gleich ist.

11. Rotorblatt (108) nach Anspruch 5, wobei
die Serrations (20) eine Verdrillung aufweisen, insbesondere eine Verdrillung, die abhängig von der Radiusposition variiert, insbesondere mit zunehmender Radiusposition zunimmt, wobei es sich bei der Verdrillung um eine Drehung der Form der Serration um eine Achse parallel zur Profiltiefenrichtung handelt, die mit zunehmender Distanz zur Hinterkante zunimmt und/oder wobei
die Serrations (20) eine Kontur aufweisen, und mindestens eine Serration (20) eines Hinterkantenelementsatzes (10) eine Geometrieänderung der Kontur zu einer weiteren Serration (20) desselben Hinterkantenelementsatzes (10) aufweist, wobei die Geometrieänderung umfasst:
die Änderung wenigstens eines Winkels, der von zwei Kanten einer Serration (20) aufgespannt wird, und/oder
die Änderung wenigstens einer geraden Kante zu einer konkaven oder konvexen Kante.

12. Rotorblatt (108) nach Anspruch 11, wobei
die Krümmung der von der Hinterkante des Rotorblatts (108) zu einer Spitze der Serrations (20) zulaufenden Kanten der Serrations (20) eines Hinterkantenelementsatzes (10) in radialer Richtung von Serration (20) zu Serration (20) von konvex zu konkav oder von konkav zu konvex übergehend ausgebildet ist.

13. Rotorblatt (108) nach einem der Ansprüche 5 bis 12, wobei
die Serrations (20) einen Einbauwinkel aufweisen, der sich zwischen der Richtung, in der sich die Länge der Serrations (20) erstreckt und der Hinterkante des Rotorblattes (108) aufspannt und der insbesondere abhängig von der Radiusposition oder Länge der Serrations (20), variiert,
wobei der Einbauwinkel mit zunehmender Länge der Serrations (20) vorzugsweise abnimmt.

14. Rotorblatt (108) nach einem der vorhergehenden Ansprüche, wobei
an einem Übergang zwischen zwei Hinterkantenelementsätzen (10) eine sprunghafte Vergrößerung der Hinterkantenelemente (20) auftritt.

15. Verfahren zur Herstellung und/oder Wartung eines Rotorblattes (108) für eine Windenergieanlage (100), wobei sich das Rotorblatt (108) von einer Rotorblattwurzel bis zu einer Rotorblattspitze in einer Rotorblattlängsrichtung mit einer Rotorblattlänge erstreckt und dabei eine sich zwischen einer Vorderkante und einer Hinterkante einstellenden Profiltiefe aufweist und eine Radiusposition den radialen Abstand zu einer Drehachse angibt, um die das Rotorblatt (108) bei Betrieb der Windenergieanlage (100) rotiert, umfassend:
Anordnen von mindestens zwei Hinterkantenelementsätzen (10) an der Hinterkante, wobei jeder Hinterkantenelementsatz (10) mindestens zwei Hinterkantenelemente (20) umfasst, die voneinander unterschiedlich ausgebildet sind,
**dadurch gekennzeichnet, dass**
mindestens ein Hinterkantenelement (20), das in Rotorblattlängsrichtung näher an der Rotorblattspitze angeordnet ist, größer ist als ein Hinterkantenelement (20), das in Rotorblattlängsrichtung näher an der Rotorblattwurzel angeordnet ist.
